# EUROPEAN PATENT APPLICATION

(11) **EP 0 858 176 A1**
(43) Date of publication of application: **12.08.1998**
(21) Application number: 97300736.2
(22) Date of filing: 05.02.1997
(51) Int. Cl.: H04B 7/185, H04B 7/195

(54) **Method of generating a map of electromagnetic radiation and the application thereof in a satellite mobile telephone system**

(71) Applicant: ICO Services Ltd., London W6 9BN (GB)
(72) Inventor: Bains, Navjit Singh, Slough, Berkshire SL3 7PQ (GB)
(74) Representative: Geary, Stuart Lloyd

(57) **Abstract**

In a satellite mobile telephone system, it is desirable to be able to allocate frequencies to the mobile telephone (4) to satellite (3) uplinks so as to avoid sources of interference. Some sources of interference can be identified by reference to frequency allocations made at the WARC. However, some sources of interference, such as pirate transmissions and faulty transmitting equipment, can only be located by searching for them.

According to the invention, communications satellites (3) are used to build up a map of potentially interfering radiation sources. The satellites (3) monitor mobile telephone to satellite uplink frequencies as they orbit, either as part of a commissioning process or, during their service lives, using apparatus (40, 41, 42, 43) not being used at a particular time for telephone calls.

## Description

The present invention relates to a method of generating a map of electromagnetic radiation and to the application of such a method in the allocation of communication channels in the satellite mobile telephone system.

Known satellite mobile telephone systems include the Inmarsat-M system, the IRIDIUM™ system described in, for example EP-A-0365885, the ICO™ system described in, for example, GB-A-2295296 and the ODYSSEY™ system described in, for example, EP-A-0510789.

The allocation of spectrum for different radio services, e.g. broadcast, mobile radio and radar, is governed by the World Administrative Radio Conferences (WARC) which take place every four years. It is at the WARC that spectrum space has been allocated to the ICO satellite mobile telephone system and in particular a 30MHz band between 1980 MHz and 2010 MHz has been allocated for the mobile telephone to satellite uplink.

Ideally, this band should be free of other users and there should be no restriction on the allocation frequencies within this band. However, in practice, users may be required to share bands and interference will arise from various sources. For instance, faulty equipment operating at a sub-harmonic of the allocated band is one possible source of interference. Another source is pirate transmissions.

It will be appreciated, however, that this problem is not unique to satellite mobile telephone systems.

It is an aim of the present invention to overcome this problem by developing a map of interference and, in the particular case of operating a mobile satellite telephone system, allocating channels for telephone calls so as to avoid the interference.

According to the present invention there is provided a method of generating a map of electromagnetic radiation, comprising: causing a directional radio antenna to orbit planet in non-geostationary orbit so as to be directed at the surface of the planet; measuring the strength of signals received by the antenna as it orbits the planet; and generating a data set representing a map of signal strengths from the measured signal strengths and knowledge of the antenna's position. The signal strength may be measured in terms of signal voltage or power amplitude. The map may relate the signal strengths either to geographical position on the surface of the planet or to the position of the satellite. In a case of a satellite having many antennas, the relevant antenna would also need to be identified.

The data set may comprise a list of locations where the signal strengths are above a threshold value. The threshold value is chosen at a level corresponding to the borderline between acceptable and unacceptable levels of interference. Preferably, the threshold is set to give a 10 dB margin.

Preferably, the strengths of signals at a plurality of frequencies are measured and the data set represents a map for each of the frequencies. The method preferably also includes recording time information together with the measured signal strengths and the data set represent a plurality of maps for different times. Preferably, the time information is a time of day with reference to a reference meridian, for example the Greenwich Meridian.

The present invention also provides a method of allocating communication channels in a satellite mobile telephone system, the method comprising performing a method as set out above and allocating communicating channels to the satellite on the basis of the data set for avoiding allocating a channel that is likely to suffer from interference.

Preferably, this method further comprises the steps of allocating a first channel to a mobile telephone for telephone call, allocating a second channel on a different frequency to the mobile telephone if the signal from the mobile telephone falls below a predetermined quality threshold, and modifying the data set so as to avoid repeating the conditions leading to the need to allocate the second channel.

Preferably, the above method of generating a map of electromagnetic radiation is performed during commissioning of a satellite. It is preferably also performed extempore using a telephone communication components of a satellite when such components are not required for a telephone call.

The present invention also provides a satellite telephone system configured to perform a method according to the present invention. Such a system may comprise a database system storing data identifying interference sources, a resource allocation means for allocating communications resources to satellites in dependence on the contents of the database system's database, and database updating means for updating the database system's database, wherein the database updating means includes a satellite, means for analysing signals received by the satellite in free mobile-to-satellite channels to detect potentially interfering signals and add data characterising detected potentially interfering signals to the database.

Embodiments of the present invention will now be described, by way of example, with reference to the accompanying drawings, in which:
Figure 1 is a schematic diagram of the physical components of a satellite mobile telephone system;
Figure 2 shows a mobile telephone partially cut away;
Figure 3 is a schematic diagram of a satellite access node as shown in Figure 1;
Figure 4 is a data flow diagram for the system shown in Figure 1;
Figure 5 shows a constellation of satellites suitable for the system of Figure 1;
Figure 6 is a block diagram of the mobile-to-SAN signal path of a satellite as shown in Figure 1;
Figure 7 is a block diagram of a satellite resource management centre and a satellite access node;
Figure 8 illustrates an interference map according to the present invention; and
Figure 9 is a flow chart illustrating a process for building the map of Figure 8.

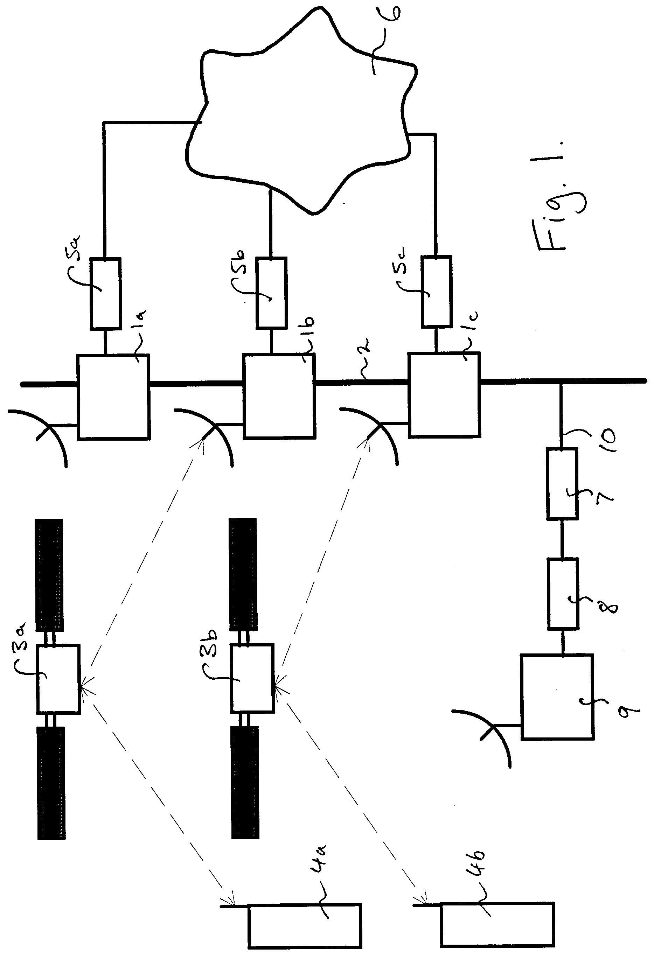

Referring to Figure 1, a satellite mobile telephone system comprises a plurality of satellite access nodes (SAN) 1a, 1b, 1c interconnected by a high capacity digital network 2 (hereinafter "the backbone network"), a plurality of satellites 3a, 3b, a plurality of a mobile telephones (UT) 4a, 4b, gateways 5a, 5b, 5c providing connections between the SANs 1a, 1b, 1c and other networks 6, a network management centre (NMC) 7, a satellite control centre (SCC) and a tracking, telemetry and control station (TT&C) 9. The NMC 7, the SCC 8 and the TT&C 9 are interconnected by a lower capacity digital network 10 which is also connected to the backbone network 2. The other networks 6 comprise the public switched telephone network (PSTN), cellular telephone networks and the like.

The SCC 8 and the TT&C 9 control the operation of the satellites 3a, 3b, for instance setting transmit power levels and transponder input tuning, as directed by the NMC 7. Telemetry signals from the satellites 3a, 3b are received by the TT&C 9 and processed by the SCC 8 to ensure that the satellites 3a, 3b are functioning correctly.

During a telephone call, a UT 4a, 4b communicates with a satellite 3a, 3b via a full duplex channel comprising a downlink channel and an uplink channel. The channels comprise TDMA time slots on a frequencies allocated on initiation of the call.

The satellites 3a, 3b are in non-geostationary orbits (see Figure 5) and comprise generally conventional satellites, such as the known Hughes HS601 model, and may include features as disclosed in GB-A-2288913. Each satellite 3a, 3b is arranged to generate an array of beams covering a footprint beneath the satellite, each beam including a number of different frequency channels and time slots.

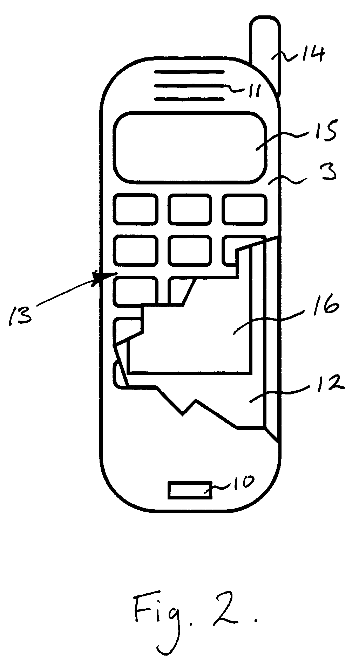

Referring to Figure 2, a UT 4 is generally similar to the units presently available for GSM networks and comprises a codec, a controller, a microphone 10, a loudspeaker 11, a battery 12, a keypad 13, a radio frequency interface, an antenna 14, a display 15 and subscriber identification module (SIM) smart card 16.

The codec comprises a low bit-rate coder, which generates a speech bit stream at 3.6 kbits/s, together with a channel coder, which applies error correction codes to the speech bit stream to produce an encoded bit stream at 4.8 kbits/s. The low bit-rate coder is a linear predictive coder. The channel coder uses Viterbi coding. The codec also comprises complementary decoders.

The SIM 16 includes a processor and a non-volatile memory which stores data identifying the subscriber and data for use in encrypted communication.

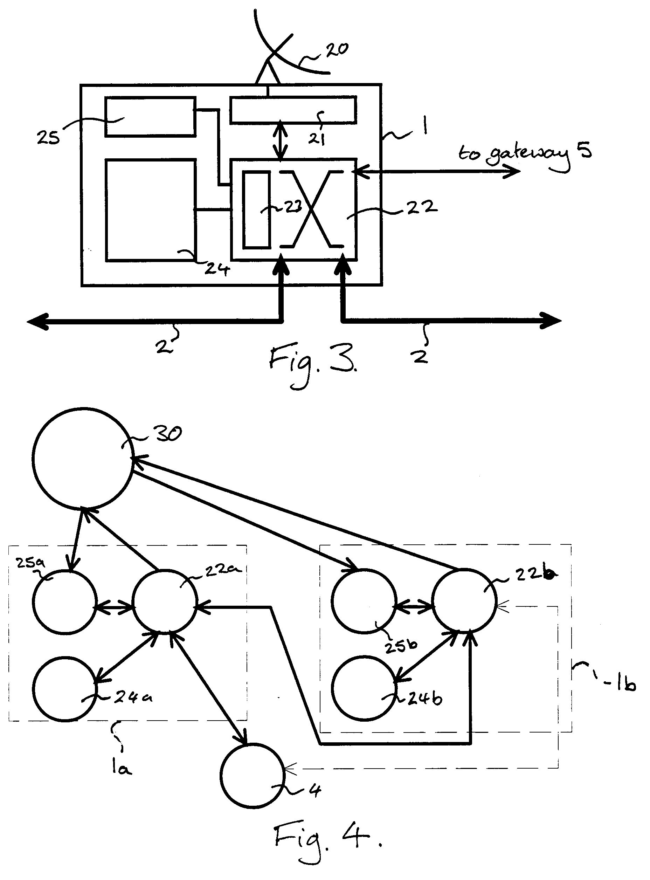

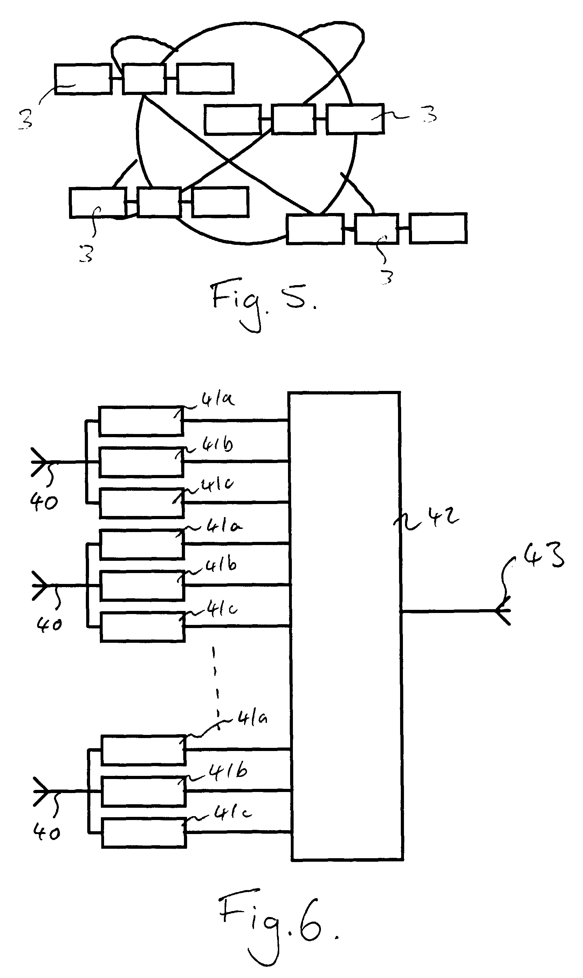

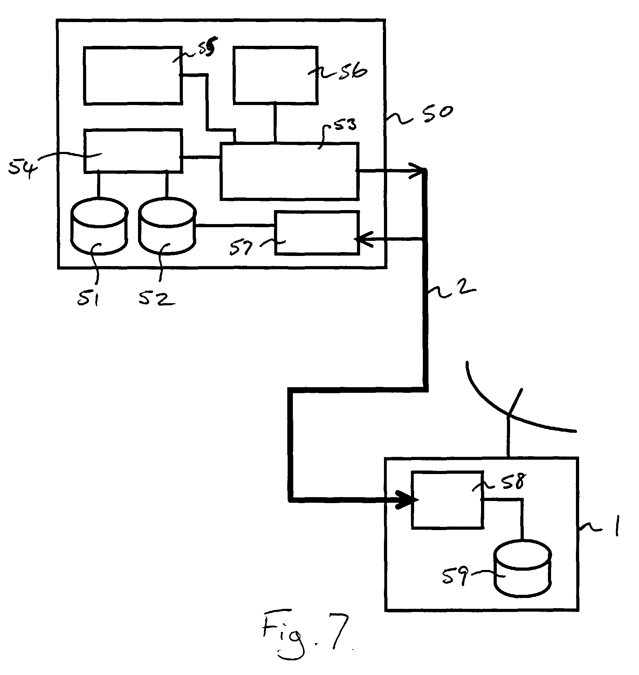

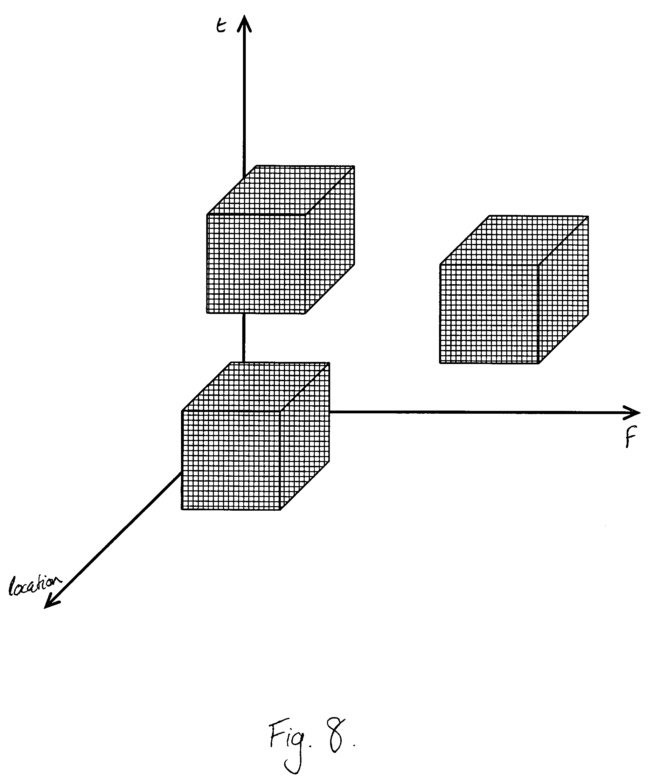

Referring to Figure 3, a SAN 1 comprises a dish antenna 20 mounted for tracking satellites, transmitter and receiver circuits 21 including amplifiers, multiplexers, demultiplexers and codecs, a mobile satellite switching centre (MSSC) 22 including a controller 23, a visitor location register database (VLR) 24 and a voice mail box unit (VMB) 25. The MSSC 22 is coupled for communications signals to the backbone network 2, to a gateway and to the transmitter and receiver circuits 21. The controller 23 is coupled for data signals to the VLR 24 and the VMB 25 and may also send and receive data signals via the backbone network 2.

The controller 23 responds to addresses on incoming communications signals, from the antenna 20, the gateway and the backbone network 2, by controlling the MSSC 22 to output the communications signals on the appropriate paths to their destinations, i.e. the antenna 20, the gateway or the backbone network 2.

The VLR 24 maintains a record of each of the subscribers registered with the SAN 1. The VMB 25 provides storage space for voice mail messages for subscribers.

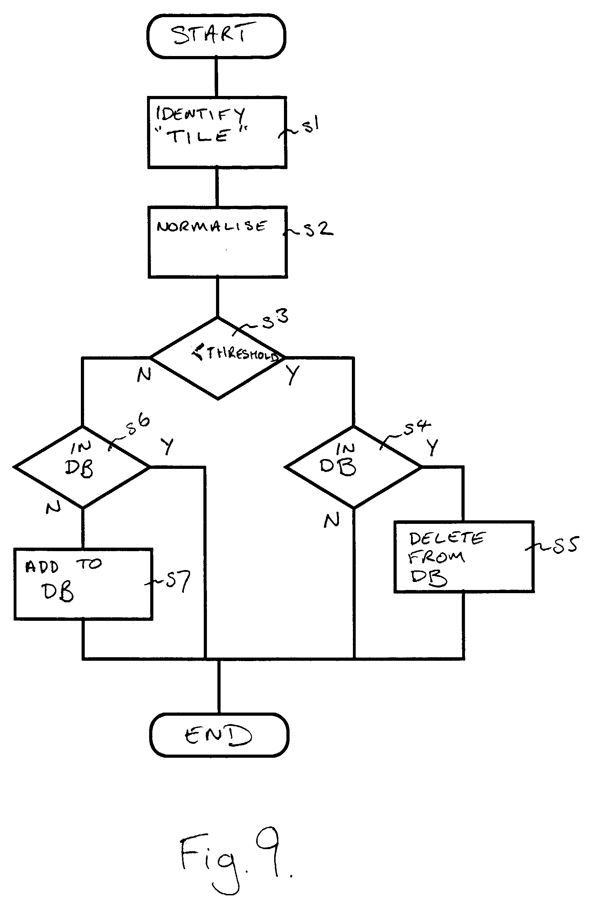

Referring to Figure 4, a database 30, called the home location register (HLR), contains records relating to each UT 4a. The record contains the UT's identity (International Mobile Subscriber Identity or IMS), the current status of the UT (whether it is "local" or "global" as will be described in greater detail below), the geographical position of the UT, the home MSSC with which the UT is registered (to enable billing and other data to be collected at a single point), the currently active SAN with which the UT is in communication via a satellite, an individual encyphering key and the address of an associated VMB location.

The HLR 30 may be located in the NMC 7 (see Figure 1) or may be distributed among the SANs 1a, 1b, 1c (see Figure 1).

Referring to Figures 1 to 4, a UT 4a may be registered with one of two distinct statuses; "local" in which the UT 4a is permitted to communicate only through one local area or part of the satellite system network, and "global", which entitles the UT 4a to communicate through any part of the satellite mobile telephone system.

The UT 4a performs an automatic registration process, of the kind well known in the art of cellular terrestrial communications, on each occasion when the UT 4a is used for an outgoing call, when the UT 4a is switched on and periodically whilst the UT 4a is operating. As is conventional, the registration process takes the form of transmitting of a signal identifying the UT 4a (e.g. by transmitting its telephone number on a common hailing or signalling channel).

The transmitted signal is picked up by one or more of the satellites 3a, 3b. Under normal circumstances, the signal is picked up by a plurality of satellites 3a, 3b, and the received signal strength or time of arrival are transmitted, together with the identity of the UT 4a and the identity of the satellite 3a, 3b receiving the signal, to the HLR 30 via the MSSCs 22a, 22b of the SANs 1a, 1b for which the satellites 3a, 3b are in communication.

The HLR 30 calculates, on the basis of the received-signal arrival times, the terrestrial position of the UT 4a which is then stored in the UT's record. The identity of the SAN 1a, 1b, 1c most suitable for communicating with the UT 4a is also stored. This is typically found by comparing the stored position of the UT 3a with the positions of each of the SANs 1a, 1b, 1c and selecting the nearest. However, account may also or instead be taken of the strengths of the signals received via the satellites 3a, 3b, 3c, or of other factors such as network congestion which may result, in borderline cases, in the selection of a SAN 1a, 1b, 1c which is not geographically closest to the UT 4a. The identity of the allocated SAN 1a is then stored in the UTs record in the HLR 30. Once the HLR record has been updated, it is copied down to the VLR 25a of the selected SAN 1a.

Referring to Figure 6, each satellite 3 has 163 antennas 40 for receiving signals from UTs. Each antenna 40 feeds three tuneable band pass filters 41a, 41b, 41c. The UT-to-satellite link uses a 30MHz band segment between 1980MHz and 2010MHz and each channel occupies 150kHz. Accordingly, each filter can be tuned to any one of 200 150kHz wide channels. The outputs of the filters 41a, 41b, 41c are fed to a transposer 42 which transposes and combines the UT-to-satellite channels to channels in a band between 6975MHz and 7075MHz. The output of the transposer 42 is fed to a satellite-to-SAN link antenna 43.

Referring to Figure 7, the allocation of frequencies for the satellites is controlled by a satellite resource management centre (SRMC) 50 located at the NMC 7 (Figure 1). The SRMC 50 can communicate with the SANs 1 via the backbone network 2.

The SRMC 50 comprises a first database 51 containing details of frequency allocation which may cause interference with the UT-to-satellite links. This data is obtained from the World Administrative Radio Conferences (WARC) and national regulatory bodies. The allocations of interest are those which fall within the UT-to-satellite uplink band, sub-harmonics of frequencies in the UT-to-satellite uplink band and allocations which could be inadvertently mapped into the satellite-to-SAN downlink band by the satellite transposers. However, this information is not complete and is augmented by empirically determined data stored in a second database 52. The empirical data is required because the WARC and national regulatory bodies cannot provide information regarding pirate transmissions, transmissions arising from faulty equipment and military transmissions, e.g. communications and radar. In many cases, it is not only important that the UT-to-satellite uplink is not disrupted but that other legitimate users such are the military do not suffer interference from UTs.

The data in the databases 51, 52 defines spaces having dimensions in frequency, signal or noise amplitude, time and satellite position. For instance, each record in the database may contain a signal or noise amplitude value and be indexed by a complex key combining frequency or channel number, Greenwich Mean Time (for instance to the nearest hour), and the co-ordinates of the centre of a beam's footprint. The signal or noise amplitude value may be binary, indicating either acceptable or unacceptable. In its simplest form the contents of the second database 52 comprise a list of allocations (frequency, time, place) which are likely to suffer from interference or which are free of interference.

The contents of the second database 52 are represented in Figure 8. Referring to Figure 8, the axes comprise location (expressed as a single dimension, for instance by dividing the surface of the globe into "tiles" and uniquely numbering each "tile"), frequency and time of day. Each "tile" is approximately the same size and shape as the area on the earth's surface of a central beam from a satellite 3. The shaded volumes indicate regions where interference levels are unacceptable and which must be avoided when frequencies are allocated to satellites.

The data from the databases 51, 52 is used by a resource allocation sub-system 53 for allocating frequencies to the satellites 3 so that UT-to-satellite communication is not disrupted. The data is provided to the resource allocation sub-system 53 by an external interference management system 54. In making the frequency allocations, the resource allocation sub-system 53 also makes use of data from a traffic planning system 55 and an EIRP (effective isotropic radiated power) management system 56.

The number of frequency/timeslot channels (i.e "resources") available in the mobile telephone system is limited by the number of satellites 3, the number of filters 41a, 41b, 41c (see Figure 6) on board each satellite 3, the bandwidth of each satellite filter 41a, 41b, 41c (150 kHz), and the number of TDMA bursts to be used in a TDMA frame. In order to make efficient use of these limited system resources, it is important to consider how many resources would be required as a function of geographic location and time; this is the role of traffic planning system 55. The traffic planning system 55 predicts how many resources would be required by the system by location and time.

Each satellite 3 has a limit to the amount of power that can be consumed at any instant of time. The amount of power used on a satellite 3 is a function of the number of resources allocated to that satellite 3 and the amount of power being consumed by each resource. In the forward direction (SAN 1 to UT 4) each satellite 3 transmits the signal at a power sufficient to provide a margin at the UT 4 to allow for signal propagation effects. In the return direction (UT 4 to SAN 1), the SAN 1 receives from the UT 4 reports on signal quality measurements made by the UT 4. The SAN 1 then calculates what power the UT 4 should transmit at and then instructs the UT 4 to transmit at that power via the satellite 3.

The purpose of the EIRP management system 56 is to ensure that the amount of power used on each satellite 3 remains within the satellite's power limit. It takes input from the traffic planning function so as to calculate the number of resources that would be required by each satellite 3 as a function of time. The EIRP management system 56 can then determine the amount of power that will be consumed by each satellite 3 as a function of time. If a satellite's power consumption limit is likely to be exceeded at any time then the frequency planning process would be informed to reduce the amount of diversity channel allocations during that time or to allocate those resources to a different satellite 3 (and/or spot-beam).

The EIRP management system 56 contains a look-up table of the EIRP each SAN should use so as to achieve a desired power margin at a UT 4, located at the centre of each spot beam. This look-up table is distributed to each SAN where it is used for real-time power settings/adjustments once the UT's location is known.

The second database 52 is updated on the basis of feedback from the SAN 1 by an interference detection unit 57. The interference detection unit 57 will be described in more detail below.

Turning now to the SAN 1, in addition to the apparatus described above, the SAN 1 includes a resource allocation controller 58 and a database 59. The resource allocation controller 58 allocates channels for telephone calls on the basis of information supplied by the SRMC 50. If a channel change by a UT 4 is required for any reason, e.g. hand over to another beam or poor signal quality, the change is logged in the database 59. Periodically, the resource allocation controller 58 transfers the contents of the database 59 to the external interference detector 57 at the SRMC 50 via the backbone network 2.

The external interference detector 57 analyses the data from the database 59 for patterns indicative of persistent interference. For example, it may determine that the quality of signal from a UT on a particular frequency is always unusable when a beam is directed to a particular area. In this case, the external interference detector 57 will output 24 records, one for each hour of the day, comprising the beam centre co-ordinates or "tile" number, the frequency, the hour and a signal or noise amplitude value corresponding to an unacceptable level of interference.

In the foregoing, the updating of a database of external interference sources has been described. The initial creation of the database will now be described.

When a satellite 3 of a satellite mobile telephone system is commissioned, it is launched into orbit aboard a rocket. However, once it is in orbit, it is not immediately made available for telephone calls. Instead, it must undergo a period of testing. During this test period, the antennas 40, filters 41a, 41b, 41c and the transponder 42 are not in use. Accordingly, they are available to monitor interfering signals while the satellite orbits.

As the satellite orbits the earth during commissioning, 200 of the filters 41a, 42b, 41c are tuned to the 200 frequency channels available. Then, the signals received at SAN's from the satellite 3 are monitored and amplitude values for the signals from each of the filters 41a, 41b, 41c are determined and sent to the NMC 7 for processing. Received signal amplitude values for each frequency channel for the whole of the portion of the earth's surface, for which the system is operative, are eventually built up.

At the NMC 7, each sample is analysed to determine whether it indicates the presence of an interfering signal according to the process illustrated in Figure 9.

Referring to Figure 9, the position of the beam, to which the sample relate, is determined from the system's knowledge of the satellite's position and its beam pattern. Once the position of the beam has been determined, the relevant "tile" can then be identified (step s1). After the "tile" has been identified, the sample value is normalised at step s2, to account for the fact that beams at the edge of the satellite's footprint cover a larger area of the earth surface than those at the centre. At step s3, the normalised value is compared with a threshold. If the sample value is below the threshold, it is determined that the particular allocation represented by the sample is usable. In this case, the databases searched at step s4 to determine whether the particular allocation has previously been identified as being unusable. If a corresponding entry is located, it is deleted at step s5. Thereafter the procedure is exited.

If, at step s3, the sample value is determined to be greater than or equal to the threshold, the database is searched, at step s6, to determine whether that particular allocation had been previously noted as being unusable. If a corresponding entry is located, the process is exited. However, if no entry is found in the database, a new entry is added at step s7.

In addition to the database updating method described above, the commissioning method may be carried out using spare satellite capacity. For instance, if at any time some of the satellite's components are not being used for telephone calls, these component can be used to monitor frequencies for interference.

Although, the present invention has been described with particular reference to the case of one satellite, it will be appreciated that the contents of the second database 52 can be built up more quickly using a plurality of satellites concurrently. It is envisaged that one or more spare satellites will orbit in the constellation of Figure 5. These spares are intended to replace quickly satellites which fail in service. These spare satellites can also be used to perform the interference detecting method described above to keep the second database 52 up to date.

## Claims

1. A method of generating a map of electromagnetic radiation, comprising:
causing a directional radio antenna to orbit a planet in a non-geostationary orbit so as to be directed at the surface of the planet;
measuring the strength of signals received by the antenna as it orbits the planet; and
generating a data set representing a map of signal strengths from the measured signal strengths and knowledge of the antenna's position.

2. A method according to claim 1, wherein the strengths of signals at a plurality of frequencies are measured and the data set represents a map for each of the frequencies.

3. A method according to claim 1 or 2, including recording time information together with the measured signal strengths, wherein the data set represents a plurality of maps for different times.

4. A method of allocating communication channels in a satellite mobile telephone system, the method comprising performing a method according to claim 1, 2 or 3, and allocating communications channels to a satellite in the basis of the data set for avoiding allocating a channel that is likely to suffer from interference.

5. A method according to claim 4, including the steps of allocating a first channel to a mobile telephone for a telephone call, allocating a second channel on a different frequency to the mobile telephone if the signal from the mobile telephone falls below a predetermined quality threshold, and modifying the data set so as to avoid repeating the conditions leading to the need to allocate the second channel.

6. A method according to claim 4 or 5, wherein a method according to claim 1, 2 or 3 is performed during commissioning of a satellite.

7. A method according to claim 4, 5 or 6, wherein a method according to claim 1, 2 or 3 is performed extempore using telephone communication components of a satellite when such components are not required for a telephone call.

8. A satellite mobile telephone system configured to perform a method according to any one of claims 4 to 7.

9. A satellite mobile telephone system according to claim 8, comprising a database system storing data identifying interference sources (52), a resource allocation means (53) for allocating communications resources to satellites in dependence on the contents of the database system's database, and database updating means (3, 57) for updating the database system's database, wherein the database updating means includes a satellite (3), means (57) for analysing signals received by the satellite in free mobile-to-satellite channels to detect potentially interfering signals and add data characterising detected potentially interfering signals to the database.

10. A method of commissioning a satellite in a satellite mobile telephone system, the method comprising the steps of:
launching a communications satellite into a non-geostationary orbit;
performing a method according to claim 1, 2 or 3 using an antenna on the satellite; and
thereafter carrying a telephone call through the satellite to or from a mobile telephone.
